# EUROPEAN PATENT APPLICATION

(11) **EP 4 072 181 A1**
(43) Date of publication of application: **12.10.2022**
(21) Application number: 22165799.2
(22) Date of filing: 31.03.2022
(51) Int. Cl.: H04W 12/122, H04W 12/61, H04W 4/46, H04W 76/14, H04L 1/18, H04L 5/00

(54) **COUNTER MEASURES FOR ATTACKING MESSAGES**

(30) Priority: 09.04.2021 FI 20215419
(71) Applicant: Nokia Technologies Oy, 02610 Espoo (FI)
(72) Inventor: KIILERICH PRATAS, Nuno Manuel, 9260 Gistrup (DK); JI, Lianghai, 9220 Aalborg (DK); PANZNER, Berthold, 83607 Holzkirchen (DE); SABOURI-SICHANI, Faranaz, 9220 Aalborg (DK); MAVUREDDI DHANASEKARAN, Ranganathan, 81737 Munich (DE); SPAPIS, Panagiotis, 81539 Munich (DE); MEDINA, Daniel, 80636 Munich (DE)
(74) Representative: Nokia EPO representatives

(57) **Abstract**

Apparatus and method for counter measures for attacking messages are provided. Solution comprises communicating (500) with another apparatus utilising sidelink transmissions, monitoring (502) for an attacking sidelink message based on the content or timing of received messages and entering (504) a defensive mode to mitigate the attack when one or more received messages has been detected as attacking sidelink messages.

## Description

### Field

The exemplary and non-limiting embodiments of the invention relate generally to wireless communication systems. Embodiments of the invention relate especially to apparatuses and methods in wireless communication networks.

### Background

Wireless communication systems are under constant development. Wireless communication amongst vehicles has been under study during recent years. Vehicular connectivity over cellular technology, such as cellular system developed by Third Generation Partnership Project, 3GPP, is denoted as Cellular Vehicle to Everything, C-V2X. It is being standardized along with the development of 5G (or New Radio, NR) communication system. Direct Vehicle to Vehicle communication without a link via a Radio Access Network, RAN, node, is denoted as sidelink.

In sidelink, terminal devices may communicate with each other directly without going through a base station or cellular node. In 5G, the sidelink air interface is called PC5 interface. Sidelink communications have been proposed to be used in connection with Public Safety and Intelligent transportation systems, ITS, which is designed to improve road safety and traffic efficiency. Communication between vehicles and between infrastructure is a vital part of ITS. Vehicle-to-vehicle communication, V2V, vehicle-to-infrastructure communication, V2I,and Vehicle to Everything, V2X, will enable communication related to various use cases, such as broadcasting situation awareness messages for assisted driving, sending emergency alerts (braking and vulnerable road user detection, for example) to increase safety, executing cooperative manoeuvres such as lane merging or platooning and more. However, the used of sidelink is not limited to above examples.

As many other wireless communication protocols, also sidelink may be targeted by malicious attackers. One type of attack is disruption of hybrid automatic repeat request, HARQ, procedure. This kind of attack may have severe impact on the performance of terminal devices, especially those having poor link quality.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided an apparatus of claim 1.

According to an aspect of the present invention, there is provided a communication system of claim 9.

According to an aspect of the present invention, there is provided a method of claim 10.

According to an aspect of the present invention, there is provided a computer program of claim 15.

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the invention.

### List of drawings

Embodiments of the present invention are described below, by way of example only, with reference to the accompanying drawings, in which
Figures 1 and 2 illustrate examples of simplified system architecture of a communication system;
Figure 3 illustrates an example of sidelink communication;
Figure 4 is a signalling chart illustrating an example of HARQ retransmission disruption attack;
Figures 5 and 6 are flowcharts illustrating some embodiments;
Figures 7 is signalling chart illustrating an embodiment;
Figures 8A and 8B are flowcharts illustrating some embodiments; and
Figure 9 illustrates an example of an apparatus.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features, structures, units, modules etc. that have not been specifically mentioned.

Some embodiments of the present invention are applicable to a user terminal, a communication device, a base station, eNodeB, gNodeB, a distributed realisation of a base station, a network element of a communication system, a corresponding component, and/or to any communication system or any combination of different communication systems that support required functionality.

The protocols used, the specifications of communication systems, servers and user equipment, especially in wireless communication, develop rapidly. Such development may require extra changes to an embodiment. Therefore, all words and expressions should be interpreted broadly and they are intended to illustrate, not to restrict, embodiments.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

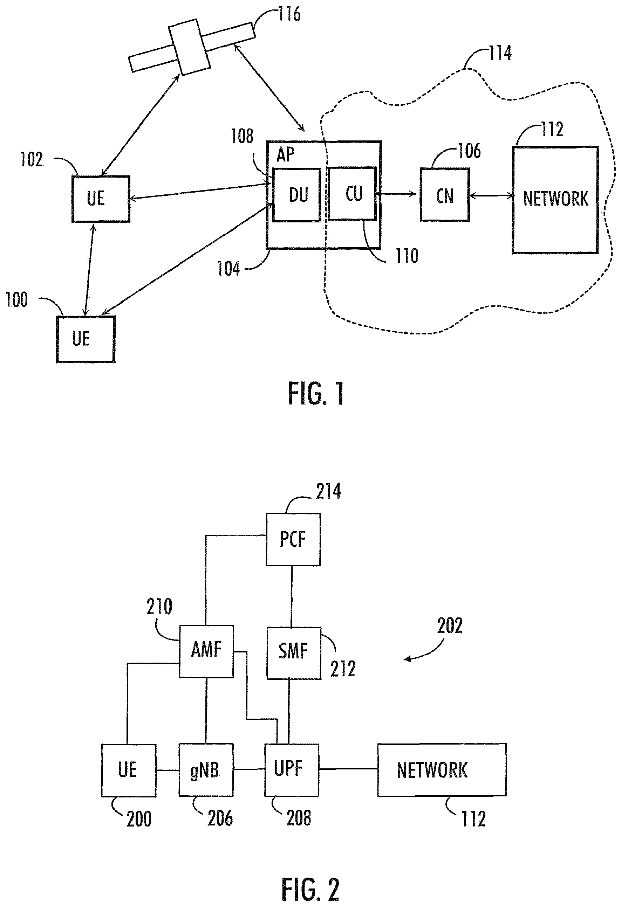

Fig. 1 depicts examples of simplified system architectures only showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig. 1.

The embodiments are not, however, restricted to the system given as an example but a person skilled in the art may apply the solution to other communication systems provided with necessary properties.

The example of Fig. 1 shows a part of an exemplifying radio access network.

Fig. 1 shows devices 100 and 102. The devices 100 and 102 are configured to be in a wireless connection on one or more communication channels with a node 104. The node 104 is further connected to a core network 106. In one example, the node 104 may be an access node such as (e/g)NodeB serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 106 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one ore more external packet data networks, and to a mobile management entity (MME) or access mobility management function (AMF), for controlling access and mobility of the devices.

Exemplary embodiments of a device are a subscriber unit, a user device, a user equipment (UE), a user terminal, a terminal device, a mobile station, a mobile device, etc

The device typically refers to a mobile or static device ( e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (loT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 108) and non-real time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (loT) devices or for passengers on board of vehicles, Mobile Broadband, (MBB) or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

Fig.2 illustrates an example of a communication system based on 5G network components. A user terminal or user equipment 200 communicating via a 5G network 202 with a data network 112. The user terminal 200 is connected to a Radio Access Network RAN node, such as (e/g)NodeB 206 which provides the user terminal with a connection to the network 112 via one or more User Plane Functions, UPF 208. The user terminal 200 is further connected to Core Access and Mobility Management Function, AMF 210, which is a control plane core connector for (radio) access network and can be seen from this perspective as the 5G version of Mobility Management Entity, MME, in LTE. The 5G network further comprises Session Management Function, SMF 212, which is responsible for subscriber sessions, such as session establishment, modify and release, and a Policy Control Function, PCF 214 which is configured to govern network behavior by providing policy rules to control plane functions.

In sidelink communication, the terminal devices communicate with each other without going through a base station or cellular node. The communication may be between a terminal device to another (unicast), or from one terminal device to many (broadcast, groupcast).

Thus, a transmitting terminal device may transmit sidelink information to a receiving terminal device or a group of receiving terminal devices or all terminal devices in proximity of transmitting terminal device. The resources for transmission may come from a (pre-)configured resource pool, at least for transmitting sidelink control information, SCI, which is used as a scheduling assignment for a sidelink data transmission. On the other hand, receiving terminal device needs to keep monitoring over the (pre-)configured resource pool to receive sidelink information, at least for receiving all SCI instances and determining whether a received SCI and corresponding sidelink data transmission is meant for the terminal device for reception or not. The SCI comprises a Source (SRC) and/or destination (DST) identifications ID(s) based on which the terminal device maty determined whether it is a recipient or not. SRC corresponds to transmitting, Tx, side of the terminal device and DST corresponds to receiving, Rx, side of the terminal device. This is applied for all casting types over sidelink, unicast, groupcast or broadcast.

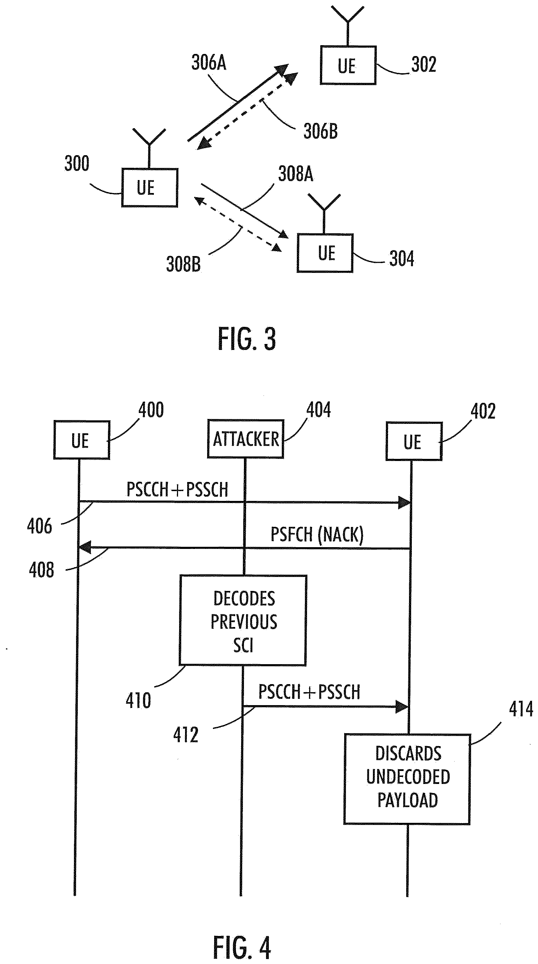

Fig. 3 illustrates an example of sidelink communication. In the figure, a terminal device 300 is transmitting sidelink data 306A, 308A to two receiving terminal devices 302, 304. The communication also comprises sidelink signalling 306B, 308B.

Sidelink may be operated in different modes. In mode 1, the network, such as serving NodeB, reserves and allocates resources for sidelink communication of terminal devices. This means that a transmitting terminal device may need to be in RRC CONNECTED state of the serving NodeB in order to get Mode 1 resources allocated. Mode 2 is based on autonomous selection of transmission resources to be used based on a sensing procedure or a random selection procedure from a preconfigured Tx resource pool by the transmitting terminal device. The sensing procedure is preferred and used for normal operation while the latter is used for exceptional operations or situations with a particular, preconfigured resource pool. Mode 2 can be used for the transmitting terminal device being in coverage (IC) or out-of-coverage (OoC); in RRC IDLE, RRC INACTIVE or RRC CONNECTED state.

The configuration of the resources in the sidelink resource pool defines the minimum information required for a receiving terminal device to be able to decode a transmission, which includes the number of sub-channels, the number of Physical Resource Blocks, PRBs, per sub-channels, the number of symbols in the Physical Sidelink Control Channel, PSCCH, which slots have a Physical Sidelink feedback Channel, PSFCH, and other configuration aspects.

The details of the actual sidelink transmission (the payload) are provided in the PSCCH in sidelink control information for each individual transmission. The sidelink control information is transmitted in two stages. The first stage SCI is conveyed by the PSCCH, while the second stage SCI is transmitted using Physical Sidelink Shared Channel, PSSCH resources.

In the first stage, the information comprises the time and frequency resources, the Demodulation Reference Signal configuration of the PSSCH, the Modulation Coding Scheme configurations, PSFCH and other supporting information.

The second stage comprises details about the HARQ feedback such as HARQ process number, New Data Indicator, NDI, redundancy version, Source and Destination identifications, Tx and Rx IDs, Cast type, Channel State Information request and whether HARQ feedback is enabled is provided in the 2nd stage SCI.

Recently sophisticated attacks against sidelink communication have been detected. In such attacks, the attacking party disrupts sidelink communications by exploiting the current sidelink design, making it possible that this attacker can go unnoticed by a legitimate terminal device. In the following we identify on sidelink design aspect that can be exploited, in what may be called the "HARQ retransmission disruption" attack.

In the "HARQ retransmission disruption" attack, illustrated Fig. 4, two legitimate terminal devices 400, 402 are communicating. The terminal device 400 transmits PSCCH+PSSCH 406 to the receiving terminal device 402. In this example the terminal device 402 responds with a negative acknowledgement, NACK 408, storing undecoded payload for HARQ process. The attacker 404, decodes 410 a transmission and/or a NACK in the PSFCH, transmits a new PSCCH+PSSCH payload 412 with the previous legitimate transmission's Tx and Rx IDs, HARQ process ID and toggled NDI. This causes the receiving terminal device 402 to flush 414 its reception buffer and prevent the HARQ process from being completed successfully. For this attack, the attacker needs to decode both the 1st stage SCI (i.e. the PSCCH) and the 2nd stage SCI of the sender i.e., terminal device 400 transmission.

The main consequence of the "HARQ retransmission disruption" attack is that the terminal device 402 upon receiving the attacking PSCCH + PSSCH payload will flush its HARQ buffer associated with the HARQ process ID and in doing so prevent any future HARQ retransmissions from the legitimate transmitting terminal device 400 related to the HARQ process ID from being soft combined. This can have severe impact on the receiving terminal device 403 that experience the need for frequent HARQ retransmissions (either due to poor link quality or due to interference).

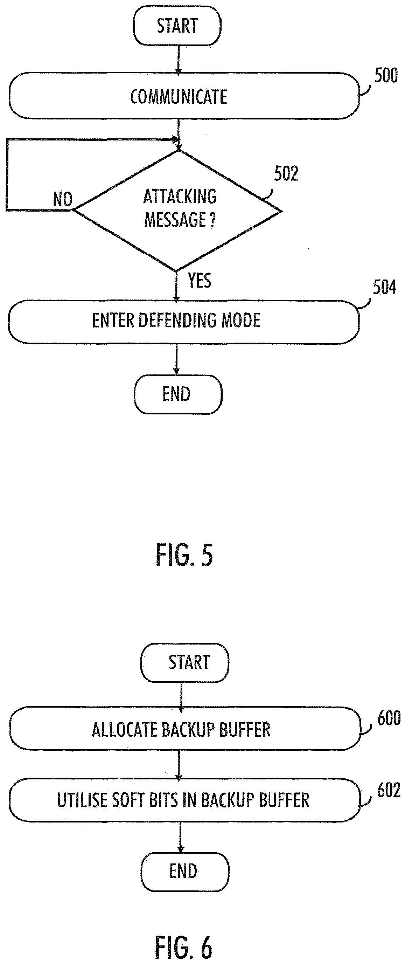

The flowchart of Fig. 5 illustrates an embodiment. The flowchart illustrates an example of the operation of an apparatus. In an embodiment, the apparatus may be a terminal device, user equipment, a part of a terminal device or any other apparatus capable of executing following steps.

In step 500, the apparatus is configured to communicate with another apparatus utilising sidelink transmissions. The apparatus may be in sidelink communication with one or more apparatuses.

In step 502, the apparatus is configured to monitor continuously for an attacking sidelink messages based on the content or timing of received messages. The detecting of attacking sidelink messages is described later in more detail.

In step 504, the apparatus is configured to, when one or more received messages has been detected as attacking sidelink messages, enter a defensive mode to mitigate the attack.

The flowchart of Fig. 6 illustrates an embodiment. The flowchart illustrates an example of the operation of an apparatus. In an embodiment, the apparatus may be a terminal device, user equipment, a part of a terminal device or any other apparatus capable of executing following steps. In an embodiment, the steps below describe the operation of the apparatus in the defensive mode.

In step 600, the apparatus is configured to allocate a backup buffer for hybrid automatic repeat request, HARQ, soft bits of received legitimate transmissions from the other apparatus, copying the soft bits into the backup buffer.

In step 602, the apparatus is configured to utilise the soft bits stored in the backup buffer in HARQ processes of legitimate transmissions.

The proposed solution enables tackling the attack and mitigating the attack. In particular, the proposed solution enables the receiving terminal device to detect and tackle the "HARQ retransmission disruption" attack.

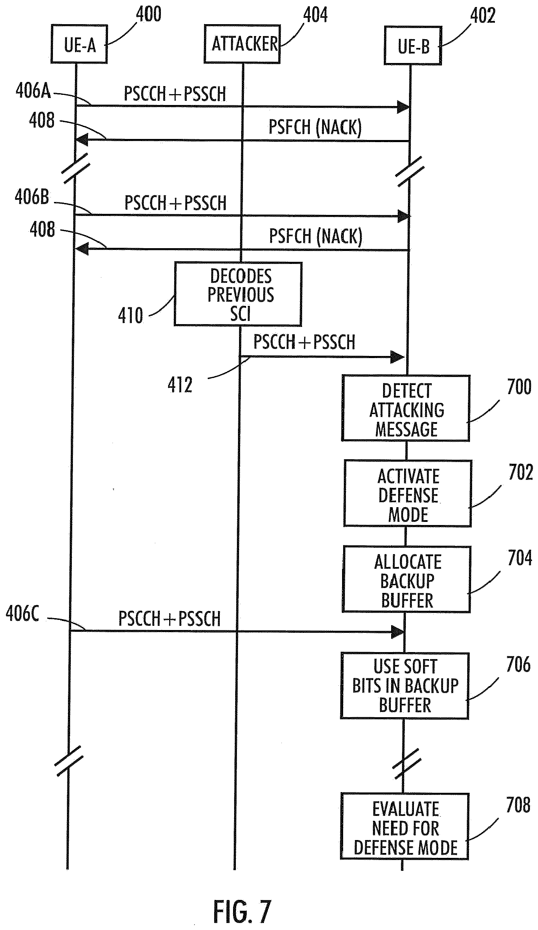

Fig. 7 is a signalling chart illustrating an embodiment related to a situation when attacking sidelink messages are detected. The situation begins in a similar manner as the example of Fig. 4.

In the example of Fig. 7, two legitimate terminal devices 400, 402 are communicating. The terminal device 400 transmits PSCCH+PSSCH 406A to the receiving terminal device 402. In this example, the terminal device 402 responds with a NACK 408 and stores undecoded payload for HARQ process. This kind of message exchange may continue and be repeated, 406B. At some point of time, an attacker 404 may decode 410 a transmission and/or a NACK in the PSFCH and transmit a new PSCCH+PSSCH payload 412 with the previous legitimate transmission's Tx and Rx IDs, HARQ process ID and toggled NDI.

In an embodiment, the terminal device 402 is configured to monitor continuously for an attacking sidelink messages based on the content or timing of received messages. During continuous monitoring the terminal device 402 may detect 700 the attacking message 410 and enter 702 a defensive mode.

In an embodiment, an attacking sidelink message can be detected based on the reception of a second stage SCI having the same Tx and Rx IDs and HARQ process ID as in the legitimate transmission for which the terminal device 402 has provided a NACK HARQ feedback. In addition, in this attacking second stage SCI, the corresponding NDI field is set as active (toggled).

In many cases, it is expected that when the receiving terminal device 402 has sent an HARQ NACK feedback, then when a legitimate transmitting terminal device 400 finally performs a new transmission (towards the receiving terminal device 402) with the same HARQ process ID, the new transmission will be a retransmission (i.e. the NDI field in the second stage SCI will be inactive (not toggled)). Therefore, an NDI set as active is an unexpected value. However, it may also be possible that a legitimate transmitting terminal device 400 decides to drop the current transmission and initiate a new one.

In an embodiment, to eliminate false detections of attacking messages, the terminal device 402 may be configured to enter the defensive mode if a given number N of messages during a sliding time window Δ₁ have been interpreted as attacking sidelink messages. The length of the time window Δ₁ and the given number *N* may be system parameters, determined by the terminal device or signalled from the network.

In an embodiment, detecting an attack may further be based on the sidelink resources that the transmitting terminal device has reserved in the SCI.

In an embodiment, the detection of an attacking message may be based on payload of the message. For example, PSSCH payload may be decoded successfully, but higher layers may not perceive the decoded payload as valid. For example, on Medium Access Control, MAC, level the MAC headers or Logical Channel ID, LCID present in the MAC headers of the payload may not be correct. On Radio Resource Control, RRC, level the RRC message may not be correct or expected. On Radio Link Control, RLC, level the indicated RLC parameters may not be valid. Examples of such parameters are the Sequence Number, Segmentation Info, Segmentation Offset. On Packet Data Convergence Protocol, PDCP, level the indicated PDCP parameters may not be valid. Examples of such parameters are PDCP sequence number and MAC-I.

In an embodiment, detecting an attack may further be based on the timing of the message. The terminal device 402 may interpret a received message as an attacking sidelink message if the hybrid automatic repeat request process identification, receiver and transmitting identifications in the message are correct but the time gap compared to a previous reception of a message of the process indicated in the message is too small.

For example, when the terminal device 402 receives a new PSCCH + PSSCH payload associated with the same process ID (and with the correct Tx and Rx IDs) and with the NDI field inactive (not toggled), the time gap comparing to the previous reception may be smaller than the sidelink HARQ round trip time or even before the receiving terminal device had the chance to provide HARQ feedback associated with the previous (potentially attacking) transmission.

In case where the terminal device 402 receives a new PSCCH + PSSCH payload associated with a new process ID (with the correct Tx and Rx IDs) and with the NDI field inactive (not toggled); and where the terminal device does not have an associated ongoing HARQ process and no associated soft bits in the HARQ buffer, the message maybe determined to an attacking message.

It may be noted, that according with the current 3GPP 38.321 specification, version 16.2.1, the NDI field value in the very first transmission is up to terminal device implementation, however a good terminal device implementation should have the NDI toggled. Still, in case that the transmitting terminal device reuses the same HARQ process ID then this trigger is still valid.

In a defensive mode 702, the terminal device 402 is configured to take defensive actions against the attack. The terminal device 402, instantiates /allocates 704 a backup HARQ buffer. In an embodiment, the backup HARQ process buffer can be realized by utilizing parts of the HARQ buffer memory currently not in use by other HARQ processes. It may be noted that the terminal device can in theory have up to 16 different HARQ processes active at the same time. As the terminal device can have potentially communication with multiple devices, this maximum number of HARQ process would scale with the number of supported simultaneous links. The number of supported HARQ processes is limited by the available memory in chipset dedicated to HARQ buffering. Therefore, the proposed solution works as long as the receiving terminal device has available space in the memory dedicated for HARQ buffering. In practice, this will be usually the case.

Where an attack has been detected and backup buffer allocated, the receiving terminal device 402 is configured to use 706 the backup HARQ process buffer to store the soft bits (such as Log Likelihood Ratios) of the previous legitimate transmission(s) associated with the HARQ process ID where the attack was detected.

When the receiving terminal device 402 receives a new PSCCH+PSSCH transmission 406C, which matches the HARQ process ID, with NDI field inactive and the correct Tx and Rx IDs, then the receiving terminal device 402 performs the soft combining 706 of this transmission with the soft bits stored in the backup HARQ buffer.

In an embodiment, when decoding of the original PSCCH+PSSCH (re)transmission has been successfully done, and if no new attacks are detected (for this HARQ process ID as well as others) for a period of time Δ₂, the receiving terminal device 402 may evaluate 708 the need for a defencing mode and revert back to normal operation and release the backup HARQ buffers. The length of the time window Δ₂ may be a system parameter, determined by the terminal device or signalled from the network.

In an embodiment, the correct decoding of the original transmission by using the backup buffer may further ensure the existence of an attacker.

In an embodiment, the receiving terminal device 402 may further send a notification to nearby terminal devices such that the nearby terminal devices may start using a defencing mode.

In a further embodiment, if the receiving terminal device 402 cannot decode the transmission by using the latest new PSCCH+PSSCH transmission and the soft bits stored in the backup HARQ buffer, the receiving terminal device may try to decode the new PSCCH+PSSCH transmissions which was originally considered to be an attack. If that is successful, the receiving terminal device may consider there was a false alarm/detection for an attacker, and the receiving terminal device may optimize its attack detection operation by considering this experience. For example, a case where the transmitting terminal device may initiate a new transmission after the number of NACK feedbacks experienced before, could be taken into account.

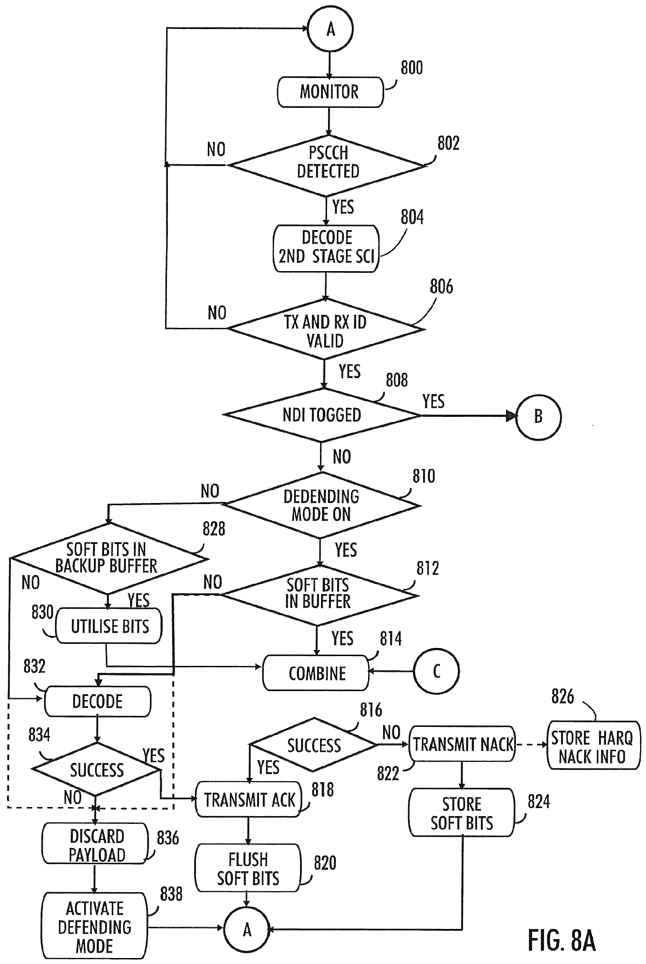

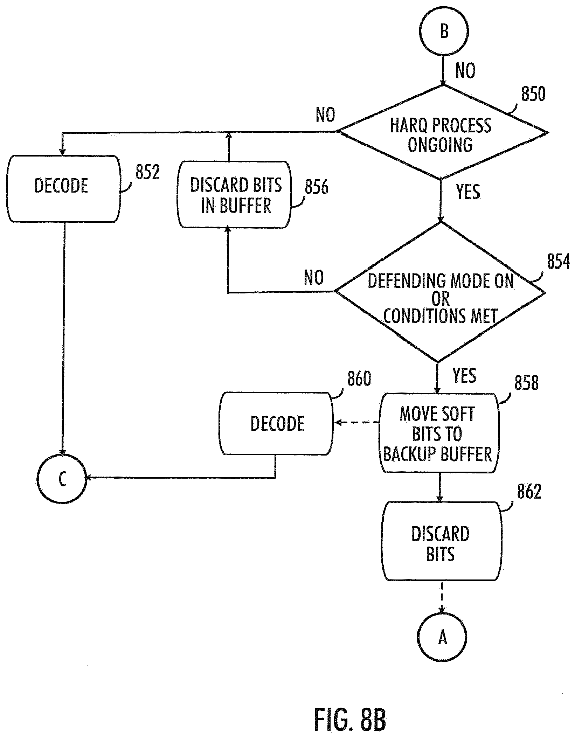

The flowcharts of Figs. 8A and 8B illustrate an embodiment. The flowcharts illustrate an example of the operation of an apparatus. In an embodiment, the apparatus may be a terminal device 402, user equipment, a part of a terminal device or any other apparatus capable of executing following steps.

In step 800, the apparatus is monitoring used resource pool for PSCCH messages.

In step 802, the apparatus is configured to check whether a PSCCH has been detected. If not process continues in step 800.

If a PSCCH message was detected, the apparatus attempts 804 to decode second stage SCI.

In step 806, the apparatus is configured to check whether the Tx and RX IDs are valid. If not process continues in step 800.

In step 808, the apparatus is configured to check whether New Data Indicator, NDI, is toggled. the Tx and RX IDs are valid. If yes process continues in step 800. If yes, process continues in Fig. 8B.

If not, the apparatus is configured to check in step 810, whether the apparatus in defensive mode. If yes, the process continues in step 828 below.

If not, the apparatus is configured to check in step 812, whether there are soft bits in the HARQ buffer associated with this HARQ process ID. If not, the process continues in step 832 below. In an embodiment, the process may also continue 840 in step 836 as explained below.

If yes, the apparatus is configured to, in step 814, perform soft combining and attempt decoding PSSCH payload.

In step 816, the apparatus is configured to check whether decoding was successful. If yes, the apparatus transmits 818 HARQ ACK in the associated PSFCH resource and flushes 820 the soft bits in the HARQ buffer associated with this HARQ process ID. The process then continues in step 800.

If decoding was not successful, the apparatus transmits 822 HARQ NACK in the associated PSFCH resource and stores 824 soft bits in the HARQ buffer associated with this HARQ process ID. In addition, the apparatus stores 826 information that a HARQ NACK was sent. The process then continues in step 800.

If the apparatus was in step 810 determined to be in defensive mode, the apparatus is configured to check in step 828, whether there are soft bits in the HARQ buffer associated with this HARQ process ID. If there were soft bits in the buffer, the apparatus is configured in step 830 to take bits into account in decoding process. The process then continues in step 814.

If were no soft bits in the buffer, the apparatus is configured to attempt to decode the PSSCH payload in step 832. In an embodiment, the process may also continue 842 in step 836 as explained below.

In step 834, the apparatus is configured to check whether decoding was successful. If yes, the process then continues in step 818.

If decoding was not successful, the apparatus discards the payload in step 836 and activates the defensive mode in step 838. The process then continues in step 800.

In an embodiment, the apparatus moves 840 from step 812 to step 836 if test is negative. In a similar manner, the apparatus may move 842 from step 828 to step 836 if test is negative. It is possible that the receiving terminal device 402 receives a transmission with a new HARQ process ID and a valid Tx and Rx ID combination, but where the NDI is not toggled. In this case the receiving terminal device 402 does not have any soft bits stored in the buffer. In an embodiment the new received transmission is discarded, while in another implementation the PSSCH payload is attempted to be decoded and then it follows the normal HARQ process. It may be noted that even if the received payload is an attack, the provided HARQ feedback (either ACK or NACK) will occur in a different PSFCH than the one that the legitimate transmitting terminal device 400 will be monitoring; as such this will not impact the behaviour of the legitimated transmitting terminal device.

If the apparatus determined in step 808, that New Data Indicator was toggled in the received message, the process continues in Fig. 8B.

In step 850, the apparatus is configured to check whether if there is an open HRQ process associated with the HARQ process ID of the received message. The apparatus checks if checks if the last interaction related to this HARQ process ID was an HARQ NACK and if there are soft bits in the associated HARQ buffer.

If are no soft bits in the buffer, the apparatus is configured to attempt to decode the PSSCH payload in step 852. The process continues then in step 814 of Fig. 8A.

If there were soft bits in the buffer, the apparatus is configured in step 854 to check if the apparatus is in defensive mode or if conditions to activate the mode have been met. If not, the apparatus discards 856 the associated soft bits in the buffer and the process continues in step 852.

If yes, the apparatus is configured in step 858 to move the soft bits associated with the process ID to backup buffer.

In an embodiment, the apparatus may attempt to decode the PSSCH payload of the new transmission in step 860. The process continues then in step 814 of Fig. 8A.

In an embodiment, the apparatus may discard the PSSCH payload of the new transmission in step 862. The process then continues in step 800 of Fig. 8A. Whether to decode or discard the soft bits is an implementation issue.

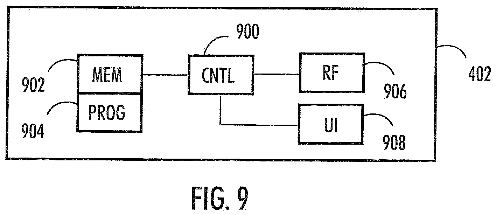

Fig. 9 illustrates an embodiment. The figure illustrates a simplified example of an apparatus applying embodiments of the invention. In some embodiments, the apparatus may be a terminal device 402, or a part of a terminal device of a telecommunication system.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus 402 of the example includes a control circuitry 900 configured to control at least part of the operation of the apparatus.

The apparatus may comprise a memory 902 for storing data. Furthermore, the memory may store software 904 executable by the control circuitry 900. The memory may be integrated in the control circuitry.

The apparatus may comprise one or more interface circuitries 906, 908. The interface circuitries are operationally connected to the control circuitry 900. An interface circuitry 906 may be a set of transceivers configured to communicate with a RAN node, such as an (e/g)NodeB of a wireless communication network, or communicate utilising sidelink communication with a terminal device. The interface circuitry may be connected to an antenna arrangement (not shown). The apparatus may also comprise a connection to a transmitter instead of a transceiver. The apparatus may further comprise a user interface 908.

In an embodiment, the software 904 may comprise a computer program comprising program code means adapted to cause the control circuitry 900 of the apparatus to realise at least some of the embodiments described above.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, processing system or a circuitry which may comprise a working memory (random access memory, RAM), a central processing unit (CPU), and a system clock. The CPU may comprise a set of registers, an arithmetic logic unit, and a controller. The processing system, controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute at least the following: communicate with another apparatus utilising sidelink transmissions, monitor continuously for an attacking sidelink message based on the content or timing of received messages and, when one or more received messages has been detected as attacking sidelink messages, enter a defensive mode to mitigate the attack.

An embodiment provides a non-transitory computer readable medium comprising program instructions for causing an apparatus to perform at least the following: communicate with another apparatus utilising sidelink transmissions, monitor continuously for an attacking sidelink message based on the content or timing of received messages and, when one or more received messages has been detected as attacking sidelink messages, enter a defensive mode to mitigate the attack.

An embodiment provides a computer readable medium comprising program instructions for causing an apparatus to perform at least the following: communicate with another apparatus utilising sidelink transmissions, monitor continuously for an attacking sidelink message based on the content or timing of received messages and, when one or more received messages has been detected as attacking sidelink messages, enter a defensive mode to mitigate the attack.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as the technology advances, the inventive concept can be implemented in various ways. The invention and its embodiments are not limited to the examples described above but may vary within the scope of the claims.

## Claims

1. An apparatus in a communication system comprising:
means for communicating with another apparatus utilising sidelink transmissions;
means for monitoring for an attacking sidelink message based on the content or timing of received messages;
means for entering a defensive mode to mitigate the attack when one or more received messages has been detected as attacking sidelink messages.

2. The apparatus of claim 1, configured further to in defensive mode:
allocate a backup buffer for hybrid automatic repeat request soft bits of received legitimate transmissions from the other apparatus, copying the soft bits into the backup buffer and
utilise the soft bits stored in the buffer in hybrid automatic repeat request processes of legitimate transmissions.

3. The apparatus of claim 1 or 2, configured further to:
enter the defensive mode if a given number of messages during a sliding time window Δ₁ have been interpreted as attacking sidelink messages.

4. The apparatus of any preceding claim, configured further to:
deactivate the defensive mode and release the backup buffer if a legitimate transmission from the other apparatus has been successfully received and decoded and if no new messages interpreted as attacking sidelink messages have not been received in a given time window Δ₂.

5. The apparatus of any preceding claim 1 to 3, configured further to:
interpret a received message as an attacking sidelink message if the hybrid automatic repeat request process identification, receiver and transmitting identifications in the message are correct but the time gap compared to a previous reception of a message of the process indicated in the message is too small.

6. The apparatus of any preceding claim 1 to 3, configured further to:
interpret a received message as an attacking sidelink message if the process identification, receiver and transmitting identifications in the message are correct but the New Data Indicator set as active when it was expected to be set as inactive.

7. The apparatus of any preceding claim 1 to 3, configured further to:
interpret a received message as an attacking sidelink message if errors are detected in the Medium Access Control, Radio Resource Control, Radio Link Control or Packet Data Convergence Protocol level data when decoding the received sidelink message.

8. The apparatus of any preceding claim, configured further to:
notify other nearby apparatuses of the existence of an attacker.

9. A communication system comprising an apparatus comprising:
means for communicating with another apparatus utilising sidelink transmissions;
means for monitoring for an attacking sidelink message based on the content or timing of received messages;
means for entering a defensive mode to mitigate the attack when one or more received messages has been detected as attacking sidelink messages.

10. A method in an apparatus of a communication system, comprising:
communicating with another apparatus utilising sidelink transmissions;
monitoring for an attacking sidelink message based on the content or timing of received messages;
entering a defensive mode to mitigate the attack when one or more received messages has been detected as attacking sidelink messages.

11. The method of claim 10, further comprising: in defensive mode, allocating a backup buffer for hybrid automatic repeat request soft bits of received legitimate transmissions from the other apparatus, copying the soft bits into the backup buffer and
utilising the soft bits stored in the buffer in hybrid automatic repeat request processes of legitimate transmissions.

12. The method of claim 10 or 11, further comprising:
entering the defensive mode if a given number of messages during a sliding time window Δ₁ have been interpreted as attacking sidelink messages.

13. The method of any preceding claim 10 to 12 further comprising:
deactivating the defensive mode and releasing the backup buffer if a legitimate transmission from the other apparatus has been successfully received and decoded and if no new messages interpreted as attacking sidelink messages have not been received in a given time window Δ₂.

14. The method of any preceding claim 10 to 12 further comprising:
interpreting a received message as an attacking sidelink message if the hybrid automatic repeat request process identification, receiver and transmitting identifications in the message are correct but the time gap compared to a previous reception of a message of the process indicated in the message is too small.

15. A computer program comprising instructions for causing an apparatus to perform at least the following:
communicate with another apparatus utilising sidelink transmissions;
monitor for an attacking sidelink message based on the content or timing of received messages;
and, when one or more received messages has been detected as attacking sidelink messages, enter a defensive mode to mitigate the attack.
